# EUROPÄISCHE PATENTSCHRIFT

(11) **EP 0 644 710 B1**
(45) Veröffentlichungstag und Bekanntmachung des Hinweises auf die Patenterteilung: **02.12.1998**
(21) Anmeldenummer: 94114021.2
(22) Anmeldetag: 07.09.1994
(51) Int. Cl.: H05B 41/29, H05B 41/38

(54) **Vorschaltgerät zum Starten und Betreiben von Hochdruck-Gasentladungslampen**
Ballast for starting and operating high pressure discharge lamps
Ballast pour amorcer et alimenter des lampes à décharge à haute pression

(30) Priorität: 22.09.1993 DE 4332112
(43) Veröffentlichungstag der Anmeldung: 22.03.1995
(73) Patentinhaber: Hella KG Hueck & Co., 59552 Lippstadt (DE)
(72) Erfinder: Daub, Wolfgang, D-59558 Lippstadt (DE)

(56) Entgegenhaltungen:
- EP-A- 0 415 496
- EP-A- 0 534 280
- GB-A- 2 265 506

## Beschreibung

Die Erfindung betrifft ein Vorschaltgerät zum Starten und Betreiben von Hochdruck-Gasentladungslampen, das aus einer Batterie gespeist wird, mit mindestens einem strom- und/oder leistungsgeregelten Spannungswandler, der über eine Zündeinrichtung mit einer Hochdruck-Gasentladungslampe verbunden ist und mit einem Eingang eines Strom-/Leistungs-Soll-Wertgeber verbunden ist, an dem ein der Lampenspannung entsprechendes Eingangssignal anliegt, mit einem Ausgang an dem Strom-/Leistungs-Soll-Wertgeber über den dem Spannungswandler ein Strom-/Leistungs-Soll-Wert zugeführt wird, wobei der Strom-/Leistungs-Soll-Wertgeber über den an den Spannungswandler gegebenen Strom-/Leistungs-Soll-Wert auch die Höhe und die Dauer einer der Hochdruck-Gasentladungslampe nach dem Zünden zugeführten Zusatzleistung bestimmt, die vom Betriebszustand der Hochdruck-Gasentladungslampe abhängt und von dem maximal zulässigen Lampenstrom begrenzt ist.

Ein solches Vorschaltgerät führt der Hochdruck-Gasentladungslampe nach dem Zünden eine Zusatzleistung zu, damit diese möglichst schnell und zuverlässig in einen sicheren Brennzustand gelangt.

Aus der DE-OS 40 15 398 ist ein Vorschaltgerät bekannt, welches der Hochdruck-Gasentladungslampe nach dem Zünden eine Zusatzleistung zuführt, deren Höhe insbesondere von der Ein- und Ausschaltdauer der Hochdruck-Gasentladungslampe abhängt. Der zeitliche Verlauf der Zusatzleistung wird dabei durch Kennfelder oder RC-Glieder vorgegeben. Zudem kann eine maximale Zeitdauer für das Wirksamwerden der Zusatzleistung vorgesehen werden.

Ein solches Vorschaltgerät ist konstruktiv recht aufwendig. Zudem berücksichtigt diese Steuerung während der Lampenanlaufphase nicht den jeweiligen momentanen Betriebszustand der Hochdruck-Gasentladungslampe, wodurch der Hochdruck-Gasentladungslampe je nach den vorliegenden Betriebsbedingungen eine Zusatzleistung zugeführt wird, die nicht der erforderlichen Zusatzleistung entspricht, wodurch ein zuverlässiger und schneller Übergang der Hochdruck-Gasentladungslampe in einen stabilen stationären Betriebszustand häufig nicht erreicht wird.

Ein einfacherer Aufbau und eine weitaus bessere Anpassung der zugeführten Zusatzleistung an den momentanen Betriebszustand der Hochdruck-Gasentladungslampe kann dadurch erreicht werden, daß Beginn und Ende der Zuführung der Zusatzleistung von der Lampenspannung der Hochdruck-Gasentladungslampe abhängig gemacht wird, wie dieses in der DE-OS 41 31 528 und der nicht vorveröffentlichten deutschen Patentanmeldung P 42 42 174 beschrieben wird.

Bei dieser an sich besonders vorteilhaften Regelung der der Hochdruck-Gasentladungslampe nach dem Zünden zugeführten Zusatzleistung können sich jedoch Probleme ergeben, wenn die angesteuerte Lampe einen Defekt aufweist.

Hochdruck-Gasentladungslampen können beispielsweise durch Mikrorisse im Glaskolben plötzlich undicht werden, wodurch die Brennspannung dieser Lampen stark absinkt. Hierdurch wird der Schwellenwert für die Lampenbrennspannung, bei der das Vorschaltgerät die Zusatzleistung zurücknimmt, nicht mehr erreicht und die Hochdruck-Gasentladungslampe wird dauerhaft mit der erhöhten Anlaufleistung betrieben.

Da das Vorschaltgerät aus Kostengründen und um eine vorteilhaft kleine Baugröße zu ermöglichen, üblicherweise so ausgelegt ist, daß es die erhöhte Anlaufleistung nur für einen relativ kurzen Zeitraum aufbringen kann, kann es durch die so bedingte dauerhafte Überlastung Schaden nehmen oder sogar thermisch zerstört werden.

Ein Defekt in der Hochdruck-Gasentladungslampe führt somit fast zwangsläufig zu einer Zerstörung des recht kostenaufwendigen Vorschaltgerätes.

Es ist daher die Aufgabe der Erfindung ein gattungsgemäßes Vorschaltgerät auf einfache und kostengünstige Weise so auszubilden, das dieses durch einen Defekt der Hochdruck-Gasentladungslampe, der zu einer niedrigen Ausgangsspannung des Vorschaltgerätes führt, nicht zerstört wird.

Diese Aufgabe wird erfindungsgemäß dadurch gelöst, daß eine zusätzliche vom Betriebszustand der Hochdruck-Gasentladungslampe unabhängige Zeitsteuerung vorgesehen ist, welche die mit der Hochdruck-Gasentladungslampe nach dem Zünden zugeführte Zusatzleistung nach einer festen vorgegebenen Zeit absenkt oder vollständig zurücknimmt.

Diese zusätzliche lampenunabhängige Zeitsteuerung reduziert somit nach einer festen vorgegeben Zeit die Betriebsleistung der Lampe auf den stationären Nennwert, um eine thermische Überlastung des Vorschaltgerätes auszuschließen.

Die Zeitkonstante dieser zusätzlichen Zeitsteuerung ist dabei deutlich größer gewählt als die Dauer der Anlaufphase einer fehlerfreien Hochdruck-Gasentladungslampe, so daß diese Zeitsteuerung bei einem fehlerfreien Lampenanlauf gar nicht zur Wirkung kommt.

Zieht sich die Anlaufphase, also die Ansteuerung der Hochdruck-Gasentladungslampe, mit einer erhöhten Leistung durch einen Lampenfehler ungewöhnlich lange hin, so wird die der Lampe zugeführte Leistung, insbesondere auf den stationären Nennwert, zurückgefahren. Da das Vorschaltgerät diesen stationären Leistungsnennwert auch unter Dauerbelastung liefern kann, ist eine Zerstörung des Vorschaltgerätes damit ausgeschlossen.

Da diese zusätzliche Zeitsteuerung als Sicherheitsvorrichtung zum Schutz des Vorschaltgerätes bei Lampenfehlern vorgesehen ist, arbeitet diese vorteilhafterweise vollkommen unabhängig von Betriebsgrößen der Hochdruck-Gasentladungslampe, wie zum Beispiel der Lampenbrennspannung oder Ein- oder Ausschaltzeiten der Hochdruck-Gasentladungslampe.

Vorteilhafterweise startet das Vorschaltgerät diese zusätzliche Zeitsteuerung sobald es eingeschaltet wird und setzt diese zurück, wenn es ausgeschaltet wird.

Weitere vorteilhafte Ausgestaltungen des erfindungsgemäßen Vorschaltgerätes ergeben sich aus den Unteransprüchen.

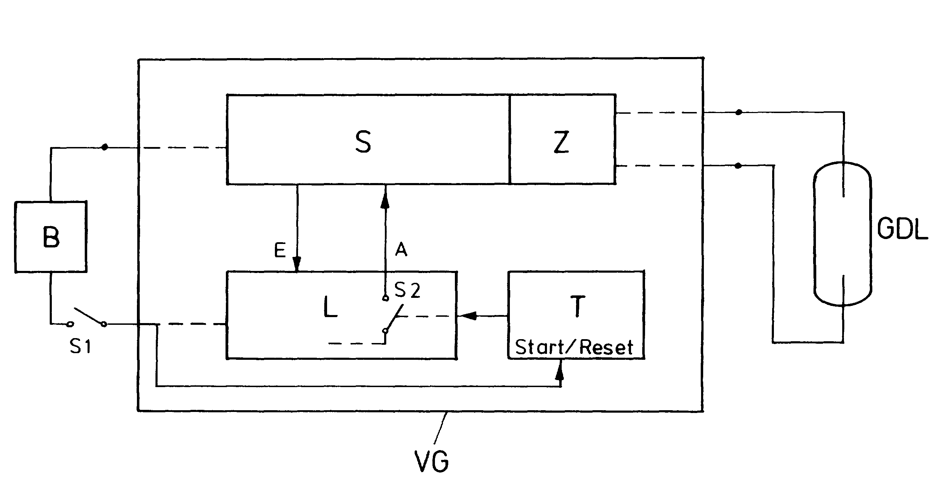

Ein Ausführungsbeispiel des Erfindungsgegenstandes ist in der Zeichnung dargestellt und wird im folgenden anhand der Zeichnung näher beschrieben.

Die einzige Figur zeigt ein Blockschaltbild eines erfindungsgemäßen Vorschaltgerätes zum Starten und Betreiben von Hochdruck-Gasentladungslampen (GDL). Das Vorschaltgerät (VG) wird von einer Batterie (B) gespeist, die zum Beispiel die Fahrzeugbatterie eines Kraftfahrzeuges sein kann. Das Vorschaltgerät (VG) weist mindestens einen strom- und leistungsgesteuerten Spannungswandler (S) auf, der über eine Zündeinrichtung (Z) mit einer Hochdruck-Gasentladungslampe (GDL) verbunden ist. Bei dem hier gezeigten Ausführungsbeispiel ist die Zündeinrichtung (Z) Teil des Vorschaltgerätes (VG). Bei einem anderen Ausführungsbeispiel kann die Zündeinrichtung (Z) auch gesondert angeordnet sein.

Der mindestens eine strom- und leistungsgeregelte Spannungswandler (S) ist bei dem hier gezeigten Ausführungsbeispiel ein DC/DC-Wandler, dem zum Ansteuern einer Wechselstrom-Hochdruck-Gasentladungslampe (GDL) ein hier nicht gezeigter Brückenschalter nachgeordnet ist. Bei einem anderen Ausführungsbeispiel, bei dem eine Gleichstrom-Hochdruck-Gasentladungslampe (GDL) betrieben werden soll, ist ein Nachschalten eines Brückenschalters bzw. Wechselrichters nicht erforderlich.

Unabhängig von der jeweiligen Ausführungsform des mindestens einen strom- und leistungsgeregelten Spannungswandlers (S) ist dieser mit einem Strom-/Leistungs-Soll-Wertgeber (L) verbunden. Der Strom-/Leistungs-Soll-Wertgeber (L) weist dabei einen Eingang (E) auf, an dem ein der Lampenspannung entsprechendes Eingangssignal anliegt. Der Strom-/Leistungs-Soll-Wertgeber (L) weist einen Ausgang (A) auf, über den dem Spannungswandler (S) ein Strom-/Leistungs-Soll-Wert zugeführt wird. Insbesondere direkt nach dem Zünden der Hochdruck-Gasentladungslampe (GDL) muß dieser eine erhöhte Leistung, d. h. eine Zusatzleistung zugeführt werden, damit die Hochdruck-Gasentladungslampe (GDL) möglichst schnell einen stabilen stationären Brennzustand ohne Flackererscheinungen annimmt. Zu diesem Zweck weist der Strom-/Leistungs-Soll-Wertgeber (L) eine in der Figur nicht dargestellte Schaltungsanordnung zum Erzeugen einer Zusatzleistung direkt nach dem Zünden der Hochdruck-Gasentladungslampe auf, die in Abhängigkeit von dem Lampenbetriebszustand steht und durch den maximal zulässigen Lampenstrom begrenzt ist.

Weiterhin weist das Vorschaltgerät (VG) eine Zeitsteuerung (T) auf, die zur Verdeutlichung in der Figur als eigenständiger Funktionsblock dargestellt ist. Die Zeitsteuerung (T) kann auf besonders vorteilhafte Weise auch durch nur wenige zusätzliche Bauteile innerhalb des Strom-/Leistungs-Soll-Wertgebers (L) oder des Spannungswandlers (S) realisiert werden.

Die Zeitsteuerung (T) beendet nach einer festen vorgegebenen Zeit, die größer ist als die von einer intakten Hochdruck-Gasentladungslampe (GDL) auch unter ungünstigen Betriebsumständen benötigte Anlaufzeit, die Beaufschlagung der Lampe mit einer erhöhten Anlaufleistung. Dieses ist in der Figur symbolisch durch einen vom Zeitgeber gesteuerten Schalter (S2) dargestellt, der bei Ansteuerung durch die Zeitsteuerung (T) nach der vorgegebenen Zeit das von dem Strom-/Leistungs-Soll-Wertgeber (L) an seinem Ausgang (A) abgegebene Signal zur Bereitstellung einer erhöhten Anlaufleistung abschaltet.

Die der Zeitsteuerung (T) vorgegebene Zeit ist dabei so gewählt, daß sie das Vorschaltgerät (VG) sicher vor Schäden oder Zerstörung durch thermische Überlastung schützt.

Ein Eingang der Zeitsteuerung (T) ist mit dem Schalter (S1) zum Einschalten des Vorschaltgerätes (VG) verbunden. über diesen Eingang wird die Zeitsteuerung (T) beim Einschalten des Vorschaltgerätes (VG) gestartet und beim Abschalten des Vorschaltgerätes (VG) zurückgesetzt.

### Bezugszeichenliste

Vorschaltgerät zum Starten und Betreiben von Hochdruck-Gasentladungslampen
- A: Ausgang
- B: Batterie
- E: Eingang
- GDL: Hochdruck-Gasentladungslampe
- L: Strom-/Leistungs-Soll-Wertgeber
- S: Spannungswandler
- S1, S2: Schalter
- T: (zusätzliche) Zeitsteuereinrichtung
- VG: Vorschaltgerät
- Z: Zündeinrichtung

## Patentansprüche

1. Vorschaltgerät zum Starten und Betreiben von Hochdruck-Gasentladungslampen, das aus einer Batterie (B) gespeist wird, mit mindestens einem strom- und/oder leistungsgeregelten Spannungswandler (S), der über eine Zündeinrichtung (Z) mit einer Hochdruck-Gasentladungslampe (GDL) verbunden ist und mit einem Eingang (E) eines Strom-/Leistungs-Soll-Wertgebers (L) verbunden ist, an dem ein der Lampenspannung entsprechendes Eingangssignal anliegt, mit einem Ausgang (A) an dem Strom-/Leistungs-Soll-Wertgeber (L) über den dem Spannungswandler (S) ein Strom-/Leistungs-Soll-Wert zugeführt wird, wobei der Strom-/Leistungs-Soll-Wertgeber (L) über den an den Spannungswandler (S) gegebenen Strom-/Leistungs-Soll-Wert auch die Höhe und die Dauer einer der Hochdruck-Gasentladungslampe (GDL) nach dem Zünden zugeführten Zusatzleistung bestimmt, die vom Betriebszustand der Hochdruck-Gasentladungslampe (GDL) abhängt und von dem maximal zulässigen Lampenstrom begrenzt ist, dadurch gekennzeichnet, daß eine zusätzliche vom Betriebszustand der Hochdruck-Gasentladungslampe (GDL) unabhängige Zeitsteuerung (T) vorgesehen ist, welche die der Hochdruck-Gasentladungslampe (GDL) nach dem Zünden zugeführte Zusatzleistung nach einer festen vorgegebenen Zeit absenkt oder vollständig zurücknimmt.

2. Vorschaltgerät nach Anspruch 1, dadurch gekennzeichnet, daß die zusätzliche Zeitsteuerung (T) beim Einschalten des Vorschaltgerätes (VG) gestartet wird und mit dem Ausschalten des Vorschaltgerätes (VG) zurückgesetzt wird.

3. Vorschaltgerät nach Anspruch 1, dadurch gekennzeichnet, daß die zusätzliche Zeitsteuerung (T) in den Spannungswandler (S) oder den Strom-/Leistungs-Soll-Wertgeber (L) integriert ist.

4. Vorschaltgerät nach Anspruch 1, dadurch gekennzeichnet, daß die der Zeitsteuerung (T) vorgegebene Zeit deutlich größer ist, als die Anlaufzeit einer intakten Hochdruck-Gasentladungslampe (GDL).

## Claims

1. Ballast for starting and operating high pressure gas discharge lamps, which is fed by a battery (B), having at least one current and/or power regulated voltage converter (S) which is connected by way of an igniting device (Z) to a high pressure gas discharge lamp (GDL) and connected to an input (E) of a current/power desired value source (L) where an input signal is present corresponding to the lamp voltage, and having an output (A) at the current/power desired value source (L) by means of which a current/power desired value is supplied to the voltage converter (S), the current/power desired value source (L) also determining, by means of the current/power desired value given to the voltage converter (S), the magnitude and duration of additional power supplied to the high pressure gas discharge lamp (GDL) after igniting dependent upon the operating condition of the high pressure gas discharge lamp (GDL) and limited by the maximum permissible lamp current, characterised in that an additional timing control (T) is provided which is independent of the operating condition of the high pressure gas discharge lamp (GDL) and which lowers or completely cancels, after a set predetermined time, the additional power supplied to the high pressure gas discharge lamp (GDL) after igniting.

2. Ballast according to claim 1, characterised in that the additional timing control (T) is started upon connection of the ballast (VG) and reset upon disconnection of the ballast (VG).

3. Ballast according to claim 1, characterised in that the additional timing control (T) is integrated in the voltage converter (S) or in the current/power desired value source (L).

4. Ballast according to claim 1, characterised in that the time predetermined for the timing control (T) is markedly greater than the start up time of an intact high pressure gas discharge lamp (GDL).

## Revendications

1. Ballast pour l'allumage et le fonctionnement de lampes luminescentes à gaz à haute pression, lequel est alimenté depuis une batterie (B), comportant au moins un convertisseur de tension (S) à régulation de courant et/ou de puissance, lequel est relié par l'intermédiaire d'un dispositif d'allumage (Z) à une lampe luminescente à gaz à haute pression (GDL) et relié à une entrée (E) d'un émetteur de valeur de consigne de courant/puissance (L), à laquelle est appliqué un signal d'entrée correspondant à la tension de la lampe, comportant une sortie (A) sur l'émetteur de valeur de consigne de courant/puissance (L) par l'intermédiaire de laquelle une valeur de consigne de courant/puissance est amenée au convertisseur de tension (S), l'émetteur de valeur de consigne de courant/puissance (L) déterminant par l'intermédiaire de la valeur de consigne de courant/puissance donnée au convertisseur (S) également la grandeur et la durée d'une puissance additionnelle amenée à la lampe luminescente à gaz à haute pression (GDL) après l'allumage, ladite puissance additionnelle dépendant de l'état de fonctionnement de la lampe luminescente à gaz à haute pression (GDL) et étant limitée par le courant de lampe maximum admissible, caractérisé en ce qu'il est prévu une commande de temps (T) additionnelle indépendante de l'état de fonctionnement de la lampe luminescente à gaz à haute pression (GDL), laquelle abaisse ou supprime totalement la puissance additionnelle amenée à la lampe luminescente à gaz à haute pression (GDL) après un temps fixe prédéterminé.

2. Ballast selon la revendication 1, caractérisé en ce que la commande de temps additionnelle (T) est mise en marche lors de la mise en circuit du ballast (VG) et est arrêtée avec la mise hors circuit du ballast (VG).

3. Ballast selon la revendication 1, caractérisé en ce que la commande de temps additionnelle (T) est intégrée dans le convertisseur de tension (S) ou dans l'émetteur de valeur de consigne de courant/puissance (L).

4. Ballast selon la revendication 1, caractérisé en ce que le temps alloué à la commande de temps (T) est nettement supérieur au temps de démarrage d'une lampe luminescente à gaz à haute pression (GDL) intacte.
